Europäisches Patentamt

European Patent Office

Office européen des brevets

(19)

(11) Veröffentlichungsnummer: **0 001 662**
**B1**

(12) **EUROPÄISCHE PATENTSCHRIFT**

(21) Anmeldenummer: **78200240.6**

(22) Anmeldetag: **11.10.78**

(51) Int. Cl.³: **F 16 B 37/14, E 05 C 3/04**

(54) **Befestigungsorgan**

(30) Priorität: **14.10.77 DEU 7731801**

(43) Veröffentlichungstag der Anmeldung:
**02.05.79 Patentblatt 79/09**

(45) Bekanntmachung des Hinweises auf die Patenterteilung:
**29.10.80 Patentblatt 80/22**

(84) Benannte Vertragsstaaten:
**BE CH DE FR GB LU NL SE**

(56) Entgegenhaltungen:
**DE - A - 2 242 870**
**US - A - 1 450 583**
**US - A - 2 249 923**
**US - A - 2 819 642**

(73) Patentinhaber: **POLYPLASTIC B.V.**
**Vlaardingweg 98**
**ROTTERDAM (NL)**

(72) Erfinder: **Kersten, Gerrit Hendrik**
**Stadhouderslaan 113**
**Schiedam (NL)**

(74) Vertreter: **van der Beek, George Frans, et al Ir.**
**Nederlandsch Octrooibureau P.O. Box 29720**
**NL - 2502 LS The Hague (NL)**

Courier Press, Leamington Spa, England.

Befestigungsorgan

Die Erfindung betrifft ein Befestigungsorgan zum Befestigen der Scharnierstütze eines Schwenkarmes oder Ausstellarmes einer ausstellbaren Fensterscheibe eines Campingwagens, in welches Befestigungsorgan die Enden von mindestens zwei durch das Organ abzudeckenden Befestigungsschrauben einschraubbar sind.

Die einfachste Art der Befestigung einer Scharnierstütze an einem gewöhnlich aus Kunststoff (Akrylat) hergestellten Fenster eines Campingwagens erfolgt mit der Hilfe von Schrauben und Muttern. Aus ästhetischen Gründen wird diese Befestigungsart praktisch nicht verwendet. Es ist auch bekannt, eine Scharnierstütze eines Schwenkarmes oder Ausstellarmes eines ausstellbaren Fensters eines Campingwagens mit der Hilfe von Aluminiumplatten zu befestigen, welche Gewindebohrungen aufweisen, in welche Schrauben eingeschraubt werden. Da eine Kunststoffscheibe nicht eine konstante Dicke hat, erstrecken sich die Schrauben ungleich durch die Gewindebohrungen, was von der Aussenseite auffallend ist. Dieses Problem kann durch die Verwendung einer an der Aussenseite der Scheibe anzubringenden Aluminiumplatte gelöst werden, welche angeschweisste Gewindestangen aufweist, auf welche die Muttern aufgeschraubt werden können. Eine derartige Verbindung ist jedoch verletzlich.

Schliesslich ist eine im Oberbegriff erwähnte Konstruktion bekannt, wobei als Befestigungsorgan zum Befestigen einer Scharnierstütze eine Kunststoffplatte mit daran ausgebildeten Röhrchen verwendet wird, wobei in die Röhrchen Schrauben eingeschraubt werden können, welche sich ihre Gewinde in der Innenwand der Röhrchen schneiden. Eine derartige Verbindung ist äusserlich schön, ihre Festigkeit lässt jedoch zu wünschen übrig.

Die Erfindung hat eine Beseitigung der erwähnten Nachteile zum Ziel, wobei ein Befestigungsorgan der erwähnten Art geschaffen werden soll, welches eine Befestigung der Scharnierstütze des Schwenkarmes oder Ausstellarmes an einer Kunststoffensterscheibe auf eine Art gestattet, welche gleichzeitig schön und fest ist. Ausgehend von einem im Oberbegriff erwähnten Befestigungsorgan wird dieses Ziel erreicht, dadurch dass das Befestigungsorgan aus einem Zeildeckel aus Kunststoff besteht, in welchem Muttern lose jedoch drehgesichert in mehreckigen, der Aussenkontur der Muttern angepassten Ausnehmungen eingelegt sind und in diesen durch eine mit Durchtrittsbohrungen für die Schrauben versehenen, am Zierdeckel befestigten Abdeckplatte gehalten sind.

Ein derartiges Befestigungsorgan wird zusammen mit mehreren Schrauben verwendet, welche durch Oeffnungen in der Kunststoffscheibe in die Muttern eingeschraubt werden. Da die Enden der Schrauben durch den Zierdeckel abgedeckt sind, ist eine unterschiedliche Einschraublänge nicht sichtbar. Ein zusätzlicher Vorteil besteht darin, dass die Muttern mit Spiel im Zierdeckel untergebracht werden können, so dass die Toleranzen der Teile gross gewählt werden können. Die erhaltene Verbindung ist sehr fest. Die Abdeckplatte kann am Zierdeckel vorzugsweise durch Ultraschallschweissung befestigt sein.

Durch die US Patentschrift 1 450 583 ist ein Zierkopf bekannt geworden, in welchem eine Mutter lose jedoch drehgesichert eingelegt ist. Die Mutter wird jedoch nicht durch eine mit Durchtrittsbohrungen versehene, am Zierkopf befestigtigten Abdeckplatte gehalten. Darüber hinaus kann nur eine Befestigungsschraube eingeschraubt werden.

Die US Patentschrift 2 249 923 zeigt ein Befestigungsorgan das mehrere separate Trägerplatten mit je einer gepressten mehreckigen Kammer aufweist. In diesen Kammern sind Muttern eingelegt, welche durch eine mit Durchtrittsbohrungen für Schrauben versehene gemeinsame Befestigungsplatte gehalten sind. Die Trägerplatten sind an einer gemeinsamen Befestigungsplatte befestigt. Die Kammern bilden keine Ausnehmungen in einem Zierdeckel.

Weiter ist durch die DE Offenlegungsschrift 2 242 870 eine Abdeckung für einen Schraubenkopf bekannt, die aus einer Kappe und einer an der Kappe befestigten Unterlegscheibe besteht. Die Abdeckung enthält keine mehreckigen Ausnehmungen zur Aufnahme von Muttern.

Die Erfindung wird anhand eines in der Zeichnung schematisch dargestellten Ausführungsbeispieles erläutert. Es zeigt:

Fig. 1 einen Teilschnitt einer Akrylatscheibe mit einem Befestigungsorgan sowie einem Schwenkarm zum Festhalten der Scheibe in einer schliessenden Stellung und

Fig. 2 das Befestigungsorgan aus der Figur 1 in zerlegtem Zustand.

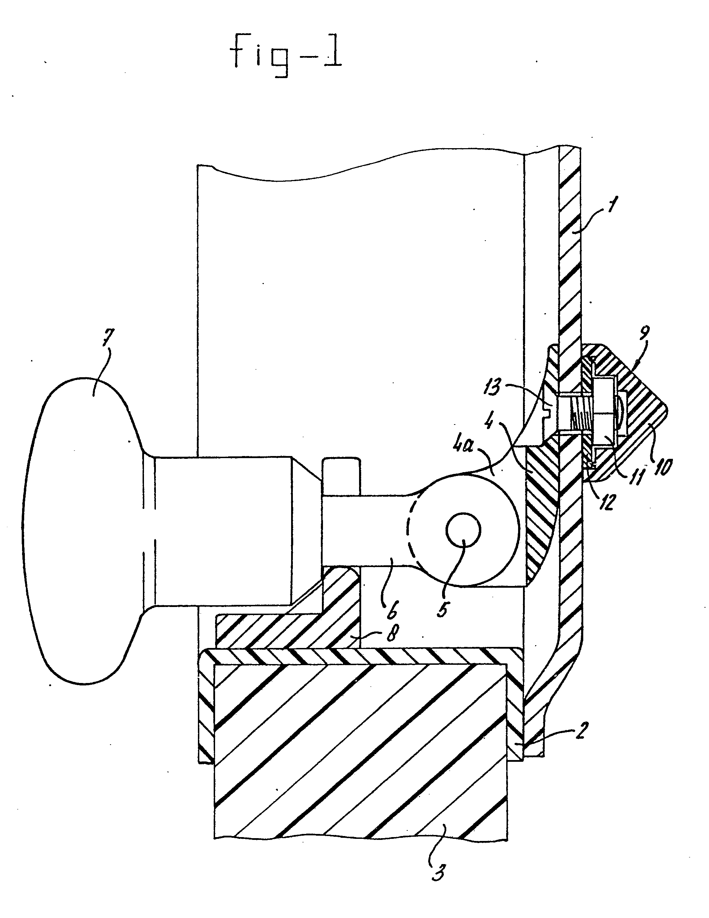

Die in der Figur 1 dargestellte Verriegelung dient zum Festhalten einer Fensterscheibe eines Campingwagens in schliessender Stellung. Die Fensterscheibe 1 ist um eine horizontale Achse schwenkbar und besteht aus durchsichtigem Kunststoff, vorzugsweise Akrylharz. Der Umfangsrand der Scheibe 1 ist auf einem U-förmigen Gummiprofil 2 abgestützt, das am Rand einer in einer Wand 3 des Campingwagens ausgebildeten Fensteröffnung angebracht ist.

Die Verriegelung enthält eine Scharnierstütze 4, die an der Scheibe 1 befestigt ist und zwei vorstehende Augen 4a aufweist, durch welche ein Zapfen 5 durchgeführt ist. Am Zapfen 5 ist ein Arm 6 schwenkbar gelagert. Am Arm 6 ist ein Bedienungsknopf 7 derart befestigt, dass er gegen die Kraft einer nicht dargestellten innen angebrachten Feder herausgezogen werden kann, und zwar in der Figur 1 nach links. Am Umfangsrand der Fensteröffnung ist eine Gabel 8 befestigt, gegen welche sich der Knopf 7 abstützen kann, wobei die Scheibe 1 gegen die Dichtung 2 gezogen wird. Die Verriegelung kann so ausgebildet sein, wie es im deutschen Gebrauchsmuster 7312455 beschrieben ist. Die vorliegende Erfindung ist auf die Befestigung der Scharnierstütze 4 an der Scheibe 1 gerichtet.

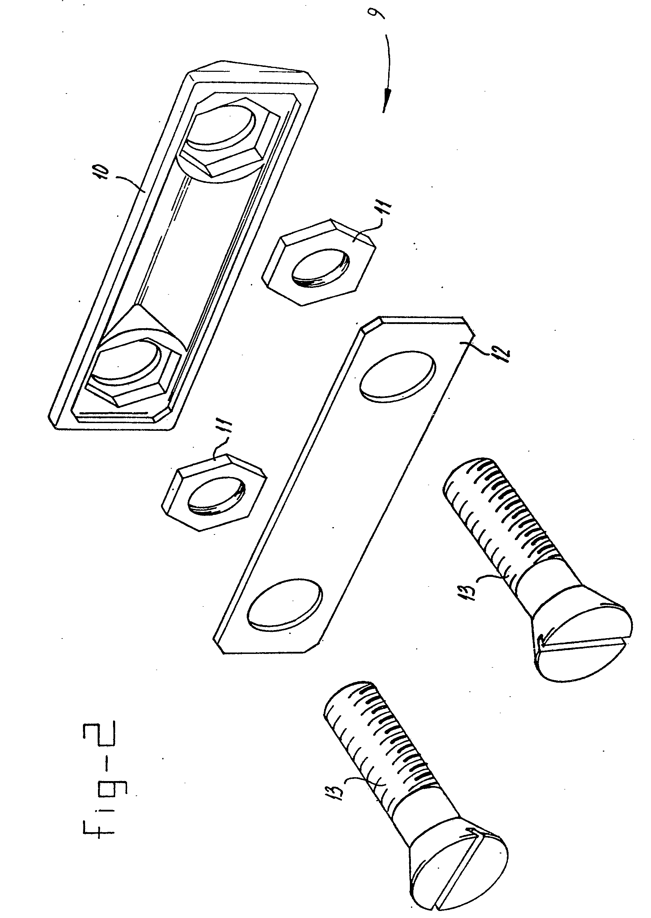

Das zu diesem Zweck bestimmte Befestigungsorgan ist in der Figur 1 mit 9 bezeichnet. Die Figur 2 zeigt das Befestigungsorgan im zerlegten Zustand.

Das Befestigungsorgan 9 enthält nach der Figur 2 einen Zierdeckel 10, in welchem zwei sechseckige Kammern ausgebildet sind. In den Kammern sind mit kleinem Spiel metallische Muttern 11 eingelegt. Zum Festhalten der Muttern 11 ist eine Abdeckplatte 12 aus Kunststoff vorgesehen, welche durch eine Ultraschallschweissung am Zierdeckel 10 befestigt ist. Die Abdeckplatte 12 ist mit zwei Oeffnungen versehen, die sich in einer Linie mit den Gewindebohrungen der Muttern 11 befinden.

Wie aus der Figur 1 hervorgeht, sind zwei Schrauben 13 durch Oeffnungen in der Scheibe 1 in den Muttern 11 eingeschraubt. Die Enden der Schrauben sind durch den Zeirdeckel 10 abgesdeckt. Eventuelle Unterschiede in der Einschraublänge der Schrauben, die durch Dickenunterschiede der Scheibe 1 verursacht sein können, sind von aussen nicht sichtbar. Die Befestigung ist starr, zweckmässig und ästhetisch vorteilhaft.

Die Erfindung ist nicht auf die Befestigung einer Scharnierstütze eines Schwenkarmes zur Verriegelung des Fensters begrenzt. So kann mit der Hilfe des erfindungsgemässen Befestigungsorganes auch ein sogenannter Ausstellarm befestigt werden.

## Patentansprüche

1. Befestigungsorgan zum Befestigen der Scharnierstütze eines Schwenkarmes oder Ausstellarmes einer ausstellbaren Fensterscheibe eines Campingwagens, in welches Befestigungsorgan die Enden von mindestens zwei durch das Organ abzudeckenden Befestigungsschrauben einschraubbar sind, *dadurch gekennzeichnet,* dass das Befestigungsorgan (9) aus einem Zierdeckel (10) aus Kunststoff besteht, in welchem Muttern (11) lose jedoch drehgesichert in mehreckigen, der Aussenkontur der Muttern angepassten Ausnehmungen eingelegt sind und in diesen durch mit Durchtrittsbohrungen für die Schrauben versehenen, am Zierdeckel (10) befestigten Abdeckplatte (12) gehalten sind.

## Claim

1. Fastening member for fastening the hinge support of a swivelling arm or pivoting arm to a pivotable windowpane of a caravan, it being possible to screw into said fastening member the ends of at least two fastening screws to be covered by the member, characterised in that the fastening member (9) comprises a decorative cover (10) made of plastics, in which nuts (11) are inserted loosely but prevented from rotation in polygonal recesses matching the outer contour of the nuts and are retained in these recesses by a cover plate (12) secured to the decorative cover (10) and provided with holes for the passage of the screws.

## Revendication

1. Organe de fixation servant à fixer l'appui de charnière d'un bras de pivotement ou bras de déviation d'une vitre en forme de déflecteur appartenant à une caravane dans lequel organe de fixation peuvent être insérées les extrémités d'au moins deux vis à recouvrir par ledit organe, caractérisé en ce que cet organe de fixation (9) est formé d'un couvercle enjoliveur (10) en matière synthétique dans lequel des écrous (11) sont insérés librement tout en étant assujettis contre la rotation dans des évidements polygonaux adaptés au contour extérieur des écrous et dans lesquels ils sontretenus par une plaque de recouvrement (12) fixée au couvercle enjoliveur (10) et munie de trous de passage pour les vis.

# fig-1

Fig-2